# EUROPEAN PATENT APPLICATION

(11) **EP 4 210 308 A1**
(43) Date of publication of application: **12.07.2023**
(21) Application number: 21871480.6
(22) Date of filing: 22.09.2021
(51) Int. Cl.: H04M 1/725

(54) **MESSAGE PROMPTING METHOD AND ELECTRONIC DEVICE**

(30) Priority: 23.09.2020 CN 202011009447
(71) Applicant: Huawei Technologies Co., Ltd., Shenzhen, Guangdong 518129 (CN)
(72) Inventor: XIONG, Liudong, Shenzhen, Guangdong 518129 (CN); LI, Chundong, Shenzhen, Guangdong 518129 (CN)
(74) Representative: Gill Jennings & Every LLP
(86) International application number: PCT/CN2021/119557
(87) International publication number: WO 2022/063110

(57) **Abstract**

A message prompt method and an electronic device are provided. The method may be applied to a virtual reality VR device or an augmented reality AR device. The method includes: receiving a first message; determining an identifier of a first application interface to which the first message belongs; obtaining, based on the identifier of the first application interface, a first area in which the first application interface to which the first message belongs is located; and indicating an orientation relationship between the first message and the first application interface in a first indication form if determining that the first area in which the first application interface to which the first message belongs is located is not in a second area, where the second area is an area in which a field-of-view range of a user is located. According to the solution of this application, the electronic device may associate and indicate a location relationship between a new message and an application interface to which the new message belongs, so that the user can conveniently and quickly find a location of the application interface to which the new message belongs. This can improve a message viewing and processing rate of the user and improve user experience.

## Description

### CROSS-REFERENCE TO RELATED APPLICATIONS

This application claims priority to Chinese Patent Application No. 202011009447.7, filed with the China National Intellectual Property Administration on September 23, 2020 and entitled "MESSAGE PROMPT METHOD AND ELECTRONIC DEVICE", which is incorporated herein by reference in its entirety.

### TECHNICAL FIELD

This application relates to the field of terminal technologies, and in particular, to a message prompt method and an electronic device.

### BACKGROUND

In recent years, with continuous progress of display technologies, head-mounted display devices such as an augmented reality (augmented reality, AR) device and a virtual reality (virtual reality, VR) device gradually attract people's attention.

Currently, in a process in which a user uses an AR/VR device, after an application installed on the device is opened, interfaces of the application are displayed in various directions of space. When there is a new message, if an application interface corresponding to the new message is not within a field-of-view range that can be seen by the user, for example, if the application interface corresponding to the new message is behind the user, the user may need to search the space for an application corresponding to the new message, and then can process the new message. Therefore, how to enable a user to easily find an application interface corresponding to a new message is a problem to be resolved.

### SUMMARY

This application provides a message prompt method and an electronic device, to help a user search for an application interface corresponding to a message, improve viewing and processing efficiency of the user, and improve user experience.

According to a first aspect, this application provides a message prompt method. The method may be applied to a virtual reality VR device or an augmented reality AR device. Specifically, the method may include: receiving a first message; determining an identifier of a first application interface to which the first message belongs; obtaining, based on the identifier of the first application interface, a first area in which the first application interface to which the first message belongs is located; and indicating an orientation relationship between the first message and the first application interface in a first indication form if determining that the first area in which the first application interface to which the first message belongs is located is not in a second area, where the second area is an area in which a field-of-view range of a user is located.

According to the foregoing technical solution, when receiving a new message, the VR/AR device may determine whether an application interface to which the new message belongs is within the field-of-view range of the user. If the application interface to which the new message belongs is not within the field-of-view range of the user, an indication form may be displayed in space, to guide the user to find a location of the application interface to which the new message belongs. In this way, it can be convenient for the user to quickly find the location of the application interface to which the new message belongs, and user experience can be improved.

In a possible design, the determining an identifier of a first application interface to which the first message belongs includes: obtaining identification information carried in the first message; and determining, based on the identification information carried in the first message, the identifier of the first application interface to which the first message belongs.

According to the foregoing technical solution, the electronic device may determine, based on identification information carried in the new message, the application interface to which the new message belongs, so that when the application interface to which the new message belongs is not within the field-of-view range of the user, the user may be prompted by the displayed indication form.

In a possible design, the method further includes: displaying the first message in the second area in a form of a notification.

In the foregoing technical solution, when the electronic device receives the new message, if the application interface to which the new message belongs is not within the field-of-view range of the user, the new message may be displayed in the field-of-view range of the user in a form of a notification. In this way, the user can conveniently view the new message in a timely manner, and the user can determine, based on content of the new message, whether the new message is an urgent message, so that the user can arrange and process the message based on the content of the message.

In a possible design, the method further includes: if determining that the first area is in the second area, displaying the first message in the first application interface to which the first message belongs.

In the foregoing technical solution, if the application interface to which the new message belongs is within the field-of-view range of the user, the new message may be directly displayed in the application interface to which the new message belongs, so that the user can view and process the message in a timely manner.

If the electronic device determines that the first area in which the first application interface to which the first message belongs is located is not in the second area, that is, the application interface to which the new message belongs is not in the field-of-view range of the user, this application may include the following two cases.

In a first case, it is determined that the first area in which the first application interface to which the first message belongs is located is not in a third area, where the third area is a first sub-area of the second area, and the third area is a current display area of a VR device or an AR device.

In a second case, it is determined that the first area in which the first application interface to which the first message belongs is located is in a third area but is not in a fourth area, where the fourth area is a second sub-area of the second area, and the fourth area is an area currently watched by eyes of the user.

In this application, the first indication form may be determined in the following several manners, so that the electronic device indicates, in the determined first indication form, location information of the new message and the application interface to which the new message belongs.

Manner 1: The first indication form is determined in a first set based on a distance between the first message and the first application interface. The first set includes at least one indication form, and the first set is pre-stored in the VR device or the AR device.

In the foregoing technical solution, the electronic device may select an indication form based on a distance between the new message and the application interface to which the new message belongs. In this way, when the electronic device receives a plurality of new messages, indication forms displayed in space can be clear, and can be convenient for the user to view.

Manner 2: Any indication form is selected from a first set as the first indication form. The first set includes at least one indication form, and the first set is pre-stored in the VR device or the AR device.

Manner 3: The first indication form is determined based on a number sequence of indication forms in a first set. The first set includes at least one indication form, and the first set is pre-stored in the VR device or the AR device.

Manner 4: Prompt information is displayed in the second area, where the prompt information is used to prompt the user to select the first indication form from a first set, the first set includes at least one indication form, and the first set is pre-stored in the VR device or the AR device; and a first indication form selected by the user is determined as the first indication form.

In the foregoing several manners, the electronic device may randomly select an indication form, or may select an indication form based on a specific sequence. Certainly, the user may select an indication form with reference to a habit of the user. In this way, user experience can be improved.

In a possible design, the first indication form may include any one of the following forms: pointer indication, connection line indication, and animation indication. It should be noted that the pointer indication, the connection line indication, and the animation (for example, sphere scrolling) indication are merely used as some examples in this application, and another indication form may alternatively be used in this application. In the foregoing indication form, the new message may be associated with the application interface to which the new message belongs, so that the user can quickly find the location of the application interface corresponding to the new message.

In a possible design, the first indication form may be displayed in an explicit form or an implicit form. The explicit form herein is a display form in which the first indication form is continuously displayed in space, and the implicit form herein is a display form in which the first indication form disappears after being displayed in space for specified duration.

In the foregoing technical solution, the indication form between the new message and the application interface to which the new message belongs may be always displayed, or may be displayed for only specific duration. In this way, it can be convenient for the user to view and process the message according to a time arrangement of the user.

According to a second aspect, this application further provides an electronic device. The electronic device includes a display, one or more processors, a memory, a plurality of applications, and one or more computer programs. The one or more computer programs are stored in the memory, the one or more computer programs include instructions, and when the instructions are invoked and executed by the one or more processors, the electronic device is enabled to perform the technical solution in any one of the first aspect and the possible designs of the first aspect.

According to a third aspect, this application further provides an electronic device. The electronic device includes modules/units for performing the method in any one of the first aspect or the possible designs of the first aspect. The modules/units may be implemented by hardware, or may be implemented by hardware executing corresponding software.

According to a fourth aspect, an embodiment of this application further provides a chip. The chip is coupled to a memory in an electronic device, to perform the technical solution in any one of the first aspect and the possible designs of the first aspect in embodiments of this application. In embodiments of this application, "coupling" means that two components are directly or indirectly combined with each other.

According to a fifth aspect, an embodiment of this application further provides a computer-readable storage medium. The computer-readable storage medium includes a computer program, and when the computer program is run on an electronic device, the electronic device is enabled to perform the technical solution in any one of the first aspect and the possible designs of the first aspect in embodiments of this application.

According to a sixth aspect, an embodiment of this application further provides a computer program product. When the computer program product runs on an electronic device, the electronic device is enabled to perform the technical solution in any one of the first aspect and the possible designs of the first aspect in embodiments of this application.

For all aspects in the second aspect to the sixth aspect and possible technical effects of the aspects, refer to descriptions of the technical effects that can be achieved by the possible solutions in the first aspect. Details are not described herein again.

### BRIEF DESCRIPTION OF DRAWINGS

FIG. 1A is a schematic diagram of a structure of an electronic device according to an embodiment of this application;
FIG. 1B is a schematic diagram of a head-mounted VR device according to an embodiment of this application;
FIG. 2 is a block diagram of a software structure of an electronic device according to an embodiment of this application;
FIG. 3 is a flowchart of a message prompt method according to an embodiment of this application;
FIG. 4A is a schematic diagram of display of an application interface according to an embodiment of this application;
FIG. 4B is a schematic diagram of a relationship between a location of an application interface and a location of a field-of-view range of a user according to an embodiment of this application;
FIG. 5 is a schematic diagram of a user interface according to an embodiment of this application;
FIG. 6 is a schematic diagram of a user interface according to an embodiment of this application;
FIG. 7A is a schematic diagram of a message prompt manner according to an embodiment of this application;
FIG. 7B is a schematic diagram of another message prompt manner according to an embodiment of this application;
FIG. 7C is a schematic diagram of still another message prompt manner according to an embodiment of this application;
FIG. 7D is a schematic diagram of still another message prompt manner according to an embodiment of this application;
FIG. 8 is a schematic diagram of an interface in which a user selects an association form according to an embodiment of this application;
FIG. 9A is a schematic diagram of another interface in which a user selects an association form according to an embodiment of this application;
FIG. 9B is a schematic diagram of still another interface in which a user selects an association form according to an embodiment of this application;
FIG. 9C is a schematic diagram of still another interface in which a user selects an association form according to an embodiment of this application; and
FIG. 10 is a schematic diagram of a structure of another electronic device according to an embodiment of this application.

### DESCRIPTION OF EMBODIMENTS

The following describes technical solutions in embodiments of this application in detail with reference to the accompanying drawings in the following embodiments of this application.

The following first describes some terms in embodiments of this application, to facilitate understanding of a person skilled in the art.

An application (application, App), app for short, in embodiments of this application is a software program that can implement one or more specific functions. Usually, a plurality of applications may be installed on an electronic device, for example, TikTok, Messages, a browser application, WeChat (WeChat), Weibo, iQIYI, Youku, and Tencent Video. An application mentioned below may be an application installed before the electronic device is delivered from a factory, or may be an application downloaded from a network or obtained from another electronic device by a user in a process of using the electronic device.

It should be noted that a method provided in embodiments of this application is applicable to a portable electronic device having a display, for example, a wearable device (AR/VR device), such as VR glasses or AR glasses. This is not limited in embodiments of this application. An example embodiment of the portable electronic device includes but is not limited to a portable electronic device using iOS^{®}, Android^{®}, Microsoft^{®}, or another operating system.

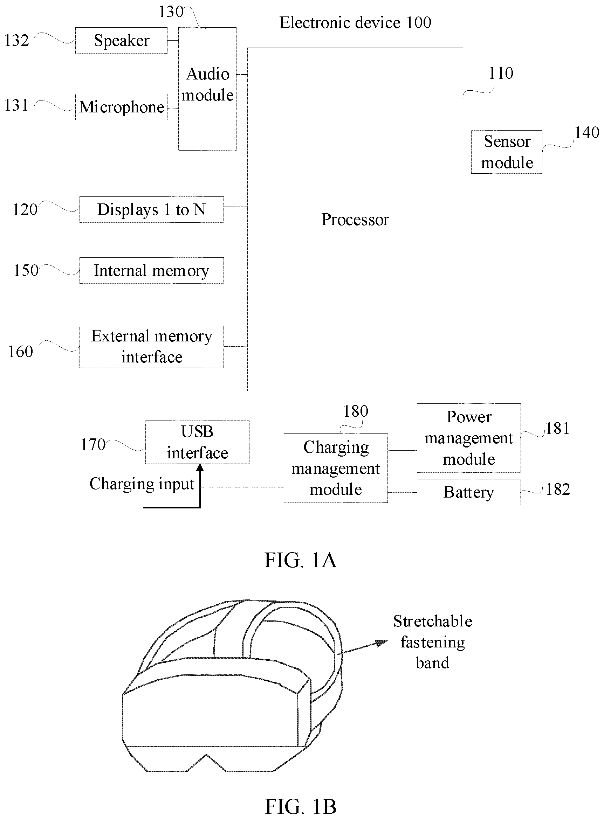

FIG. 1A is a schematic diagram of a structure of an electronic device according to an embodiment of this application. Specifically, as shown in FIG. 1A, the electronic device includes a processor 110, a display 120, an audio module 130, a sensor module 140, an internal memory 150, an external memory interface 160, a universal serial bus (universal serial bus, USB) interface 170, a charging management module 180, a power management module 181, and a battery 182. In some other embodiments, the electronic device may further include a communications module, a button, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution. A memory may further be disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

The display 120 is configured to display a display interface of an application and the like. The display 120 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like.

The electronic device may implement an audio function such as music playing or recording by using the audio module 130, a microphone 131, a speaker 132, and the AP. The audio module 130 may be configured to convert a digital audio signal into an analog audio signal for output, and is also configured to convert an analog audio signal into a digital audio signal. The audio module 130 may be further configured to encode and decode audio signals. In some embodiments, the audio module 130 may be disposed in the processor 110, or some function modules of the audio module 130 may be disposed in the processor 110. It should be noted that the audio module 130 in this embodiment of this application may also be referred to as a codec (codec).

The microphone 131, also referred to as a "mike" or a "mic", is configured to convert a sound signal into an electrical signal. When the user makes a call or sends a voice by using the electronic device, the user may make a sound by using the mouth close to the microphone 131. The microphone 131 may be configured to collect the sound of the user, and then convert the sound of the user into an electrical signal. At least one microphone 131 may be disposed on the electronic device. For example, two microphones 131 may be disposed on the electronic device, to help implement a noise reduction function.

The speaker 132, also referred to as a "horn", is configured to convert an audio signal into a sound signal and play the sound signal. For example, the electronic device may be used to listen to music or answer a call in a hands-free mode over the speaker 132. It should be noted that one or more speakers may be disposed in the electronic device in this embodiment of this application, and a type of the speaker disposed in the electronic device is not limited. In addition, in some embodiments, an audio signal output by the audio module 130 may be amplified by an amplifier and then output to the speaker 132, and the speaker 132 converts the audio signal into a sound signal and plays the sound signal. This helps improve quality of sound playing. For example, the sound signal played by the speaker 132 may be obtained by the AP from the internal memory 150 or an external memory connected to the external memory interface 160, or may be obtained by the AP from the communications module. A source of the sound signal played by the speaker 132 is not limited in this embodiment of this application.

The sensor module 140 includes one or more sensors. For example, a touch sensor is also referred to as a "touch panel". The touch sensor may be disposed on the display 120. The touch sensor and the display 120 form a touchscreen, which is also referred to as a "touch screen". The touch sensor is configured to detect a touch operation performed on or near the touch sensor. The touch sensor may transfer the detected touch operation to the application processor to determine a type of a touch event. Visual output related to the touch operation may be provided by using the display 120. In some other embodiments, the touch sensor may alternatively be disposed on a surface of the electronic device 100 at a position different from that of the display 120.

It should be noted that sensors in the electronic device 100 may further include a pressure sensor, a gyro sensor, a barometric pressure sensor, a magnetic sensor, an acceleration sensor, a distance sensor, an optical proximity sensor, a temperature sensor, a bone conduction sensor, and the like. Certainly, the electronic device 100 may further include a button (for example, a power button or a volume button).

The internal memory 150 may be configured to store computer executable program code, where the executable program code includes instructions. The processor 110 performs various function applications and data processing of the electronic device 100 by running the instructions stored in the internal memory 150. The internal memory 150 may include a program storage area and a data storage area. The program storage area may store an operating system, software code of at least one application (for example, iQIYI or WeChat), and the like. The data storage area may store data (for example, an image or a video) generated in a process of using the electronic device 100, and the like. In addition, the internal memory 150 may include a high-speed random access memory, and may further include a non-volatile memory, such as at least one magnetic disk storage component, a flash memory component, and a universal flash storage (universal flash storage, UFS).

The external memory interface 160 may be configured to connect to an external memory card, such as a micro SD card, to extend a storage capability of the electronic device 100. The external memory card communicates with the processor 110 by using the external memory interface 160, to implement a data storage function. For example, files such as pictures or videos are stored in the external memory card.

The USB interface 170 is an interface conforming to a USB standard specification, and may be specifically a mini USB interface, a micro USB interface, a USB Type-C interface, or the like. The USB interface 170 may be configured to connect to a charger to charge the electronic device 100, or may be configured to transmit data between the electronic device 100 and a peripheral device.

The charging management module 180 is configured to receive charging input from a charger. The power management module 181 is configured to connect the battery 182, the charging management module 180, and the processor 110. The power management module 181 receives input of the battery 182 and/or the charging management module 180, and supplies power to the processor 110, the internal memory 150, the external memory, the display 120, the communications module, and the like.

For example, the communications module may include a wireless communications module. The wireless communications module may provide a solution for wireless communication that is applied to the electronic device and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communications module may be one or more components that integrate at least one communications processing module. For example, when the electronic device establishes a wireless communication (for example, Bluetooth or Wi-Fi) connection to another electronic device, an electromagnetic wave signal sent by the another electronic device is received by using the wireless communications module. The wireless communications module may send the received electromagnetic wave signal to a corresponding module for processing such as demodulation, and then transmit the electromagnetic wave signal to the AP. The AP performs subsequent processing. For example, when the electromagnetic wave signal received by the wireless communications module carries audio information, for example, the audio information may be to-be-played audio sent by another electronic device, a voice of a user, or the like, the AP may output a sound signal by using the audio module 130 and the speaker 132.

It should be noted that the hardware structure shown in FIG. 1A is merely an example. The electronic device in this embodiment of this application may have more or fewer components than those shown in the figure, may combine two or more components, or may have different component configurations. The components shown in the figure may be implemented in hardware including one or more signal processing and/or application-specific integrated circuits, software, or a combination of hardware and software.

In an example, the electronic device in this embodiment of this application may be a VR/AR device.

FIG. 1B is a schematic diagram of a head-mounted VR device according to an embodiment of this application. A user may wear the VR device on the head by using a stretchable fastening band.

A software system of the electronic device 100 may use a layered architecture, including an event-driven architecture, a microkernel architecture, a micro-service architecture, or a cloud architecture. In embodiments of this application, an Android system with a layered architecture is used as an example to describe the software structure of the electronic device 100.

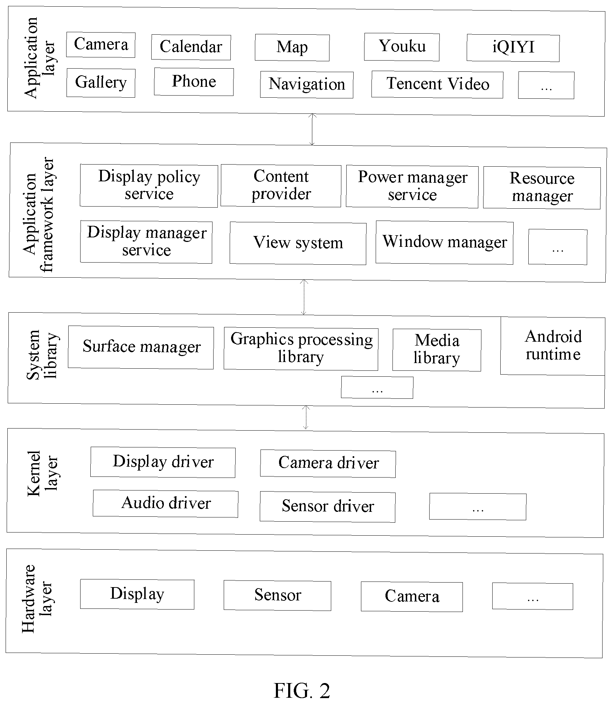

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 2, applications such as Browser, Youku, Tencent Video, Map, and iQIYI may be installed at the application layer.

The application framework layer provides an application programming interface (application programming interface, API) and a programming framework for applications at the application layer. The application framework layer includes some predefined functions.

As shown in FIG. 2, the application framework layer may include a display policy service, a power manager service (power manager service, PMS), and a display manager service (display manager service, DMS). Certainly, the application framework layer may further include an activity manager, a window manager, a content provider, a view system, a resource manager, a notification manager, and the like.

The window manager provides a window manager service (window manager service) for a window, to control and manage an interface displayed on the display.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application interface.

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, a prompt tone is made, the electronic device vibrates, and an indicator flickers.

The Android runtime includes a kernel library and a virtual machine. The Android runtime is a runtime environment of the Android operating system and is responsible for scheduling and management of the Android operating system.

The kernel library includes two parts: a function that needs to be invoked by using the Java language, and a kernel library of the Android operating system.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of audio and videos in a plurality of formats, and supports opening of static images in a plurality of formats. The media library can support a plurality of audio and video coding formats, such as MPEG-4, H.264, MP3, AAC, AMR, JPG, and PNG.

The graphics processing library is configured to implement three-dimensional graphics drawing, image rendering, composition, layer processing, and the like. The 2D graphics engine is a drawing engine for 2D drawing.

The kernel layer is a layer between hardware and software of the electronic device. The kernel layer includes at least a display driver, a sensor driver, a camera driver, an audio driver, and the like, and is configured to drive hardware at the hardware layer.

The hardware layer may include various sensors (for example, a touch sensor), a display, a camera, and the like.

In embodiments of this application, the electronic device may obtain, from the window manager, a location of an application interface to which a new message belongs and a location of a field-of-view range of a user. When the location of the application interface to which the new message belongs is not within the location of the field-of-view range of the user, a notification control may be displayed by using the notification manager, and an orientation relationship between the new message and the application interface to which the new message belongs is indicated in the displayed notification control.

The following embodiments are described by using the architecture of the electronic device 100 shown in FIG. 1A as an example.

In addition, "at least one" in the following embodiments includes one or more, and "a plurality of" means two or more. In addition, it should be understood that in the descriptions of this application, terms such as "first" and "second" are merely used for distinguishing.

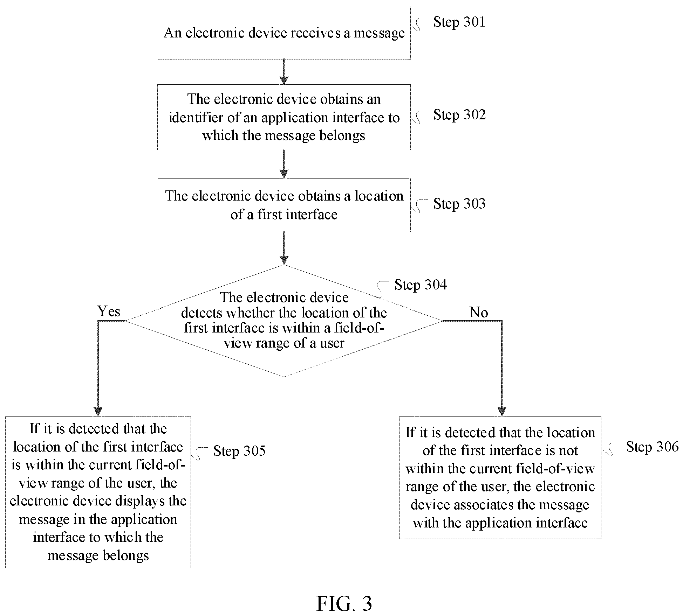

FIG. 3 is a flowchart of a message prompt method according to an embodiment of this application. Referring to FIG. 3, the method may include the following steps.

Step 301: An electronic device receives a message, where the electronic device herein may be an AR/VR device.

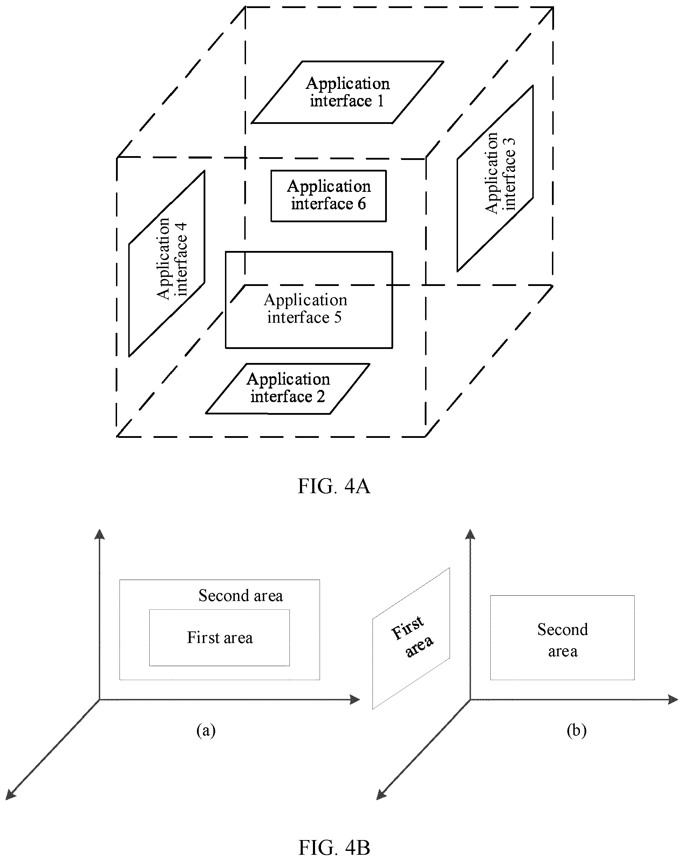

In this embodiment of this application, after a user opens an application on the electronic device, an interface of the application (briefly referred to as an "application interface" below) may be randomly displayed at each location in space. FIG. 4A is a schematic diagram of display of an application interface according to an embodiment of this application. As shown in FIG. 4A, it is assumed that application interfaces displayed in the space include an application interface 1, an application interface 2, an application interface 3, an application interface 4, an application interface 5, an application interface 6, and the like, and these application interfaces are distributed in different directions in the space. It may be understood that FIG. 4A is merely a schematic description, a dashed-line box in FIG. 4A is merely used to illustrate an application interface displayed in the space, and a quantity of application interfaces included in the space, a display direction and a location of the application interface, and the like are not limited to the foregoing example.

It should be noted that the user may open a plurality of application interfaces in one application, that is, a plurality of interfaces of one application may be displayed in the space. In addition, the user may move, according to a use habit of the user, the application interface displayed in the space.

Step 302: The electronic device obtains an identifier of an application interface to which the message belongs.

In a possible implementation, the new message may carry identification information. When receiving the message, the electronic device may determine, by using the identification information carried in the new message, the identifier of the application interface to which the new message belongs. For example, the electronic device receives a QQ message sent by a QQ friend, and the QQ message may carry a QQ number. In this case, when receiving the message, the electronic device may determine that an application interface corresponding to the message is an application interface of QQ. In other words, there may be a correspondence between identification information carried in a new message and identification information of an application interface.

In this embodiment of this application, there may be a correspondence between an application and identification information of an application interface. In an example, it is assumed that applications opened by the user include three applications: app 1, app 2, and app 3, and each application displays only one application interface. In this case, for the correspondence between an application and identification information of an application interface, refer to Table 1.

**Table 1: Correspondence between an application and identification information of an application interface**

| Application | Identification information of an application interface |
|---|---|
| app 1 | 1 |
| app 2 | 2 |
| app 3 | 3 |

Certainly, it may be understood that when each application opens only one application interface, an identifier corresponding to the application interface may alternatively be represented in another form. For example, an identifier of a unique application interface opened by app 1 may be denoted as 1-1, and an identifier of a unique application interface opened by app 2 may be denoted as 2-1. This is not limited in this application.

For example, app 1 is QQ, app 2 is WeChat, and app 3 is iQIYI. It is assumed that the electronic device receives a QQ message sent by a QQ friend, and the QQ message may carry a QQ number. In this case, when receiving the message, the electronic device may determine that an identifier of an application interface to which the message belongs is 1.

In another example, it is assumed that applications opened by the user include three applications: app 1, app 2, and app 3, and each application displays a plurality of application interfaces. In this case, for the correspondence between an application and identification information of an application interface, refer to Table 2.

**Table 2: Correspondence between an application and identification information of an application interface**

| Application | Application interface | Identification information of the application interface |
|---|---|---|
| app 1 | Interface 1 | 1-1 |
| | Interface 2 | 1-2 |
| app 2 | Interface 1 | 2-1 |
| | Interface 2 | 2-2 |
| | Interface 3 | 2-3 |
| app 3 | Interface 1 | 3-1 |
| | Interface 2 | 3-2 |

Certainly, it may be understood that the foregoing table uses only an example in which app 1 and app 3 each open two application interfaces and app 2 opens three application interfaces. In this application, four, five, or the like application interfaces may be opened. A quantity of opened application interfaces is not limited herein in this application.

It should be noted that Table 1 and Table 2 are merely examples for description, and the identification information of the application interface may alternatively be represented in another form such as A, B, C, a, b, or c. This is not limited in this application.

For example, app 1 is QQ, app 2 is WeChat, app 3 is iQIYI, an interface 1 is a chat interface corresponding to a QQ friend 1, and an interface 2 is a chat interface corresponding to a QQ friend 2. It is assumed that the electronic device receives a QQ message sent by the QQ friend 1, and the QQ message may carry a QQ number. In this case, when receiving the message, the electronic device may determine that an identifier of an application interface to which the message belongs is 1-1.

In this embodiment of this application, the identification information of the application interface may be predefined, or may be randomly defined. In other words, the identification information of the application interface may be fixed, or may be variable. For example, the electronic device may predefine one piece of identification information for each application interface, or the electronic device may record one piece of identification information when the user opens an application interface, and then perform analogy based on identification information of a current interface when a next interface is opened.

For example, if the user opens an application interface 1 in app 1, the electronic device may record identification information of the application interface 1 as 1. When the user continues to open a next application interface 2 in app 1, the electronic device may record identification information of the application interface 2 as 2, and so on. Alternatively, if the user opens an application interface 1 in app 1, the electronic device may record identification information of the application interface 1 as 1-1. When the user continues to open a next application interface 2 in app 1, the electronic device may record identification information of the application interface 2 as 1-2, and so on.

It should be noted that an identifier of an application interface in this embodiment of this application is not fixed. For example, when the user opens an application interface of WeChat, the application interface of WeChat may be denoted as an "interface 1". If the user closes the interface 1 and then opens an application interface of WeChat again, the application interface of WeChat may be denoted as an "interface 2". In other words, when the user closes an application interface and then opens the application interface again, an identifier of the application interface changes.

Step 303: The electronic device obtains, based on the identifier of the application interface to which the message belongs, a location of the first interface to which the message belongs.

After receiving the new message, the electronic device may obtain the identifier of the application interface corresponding to the new message, and then the electronic device may obtain, based on the identifier of the application interface, the location of the application interface corresponding to the new message.

For ease of description, in this embodiment of this application, it is assumed that the electronic device receives a new message, and an application interface to which the received new message belongs is denoted as a "first interface".

In a possible implementation, the location of the first interface may be represented by using coordinates of the first interface, for example, may be represented by using coordinates in a three-dimensional coordinate system.

Step 304: The electronic device detects whether the location of the first interface is within a field-of-view range of the user.

In a possible implementation, before step 304 is performed, the electronic device may obtain the location of the current field-of-view range of the user, and then determine, based on the location of the first interface and the location of the current field-of-view range of the user, whether the location of the first interface is within the field-of-view range of the user.

For ease of description below, the location of the first interface may be denoted as a "first area", and the location of the current field-of-view range of the user may be denoted as a "second area". FIG. 4B is a schematic diagram of a relationship between a location of an application interface and a location of a field-of-view range of a user according to an embodiment of this application.

When the location of the application interface is within the field-of-view range of the user, for example, referring to (a) in FIG. 4B, the first area is a part of the second area. When the location of the application interface is not within the field-of-view range of the user, for example, referring to (b) in FIG. 4B, the first area and the second area are not on a same plane.

Step 305: If it is detected that the location of the first interface is within the current field-of-view range of the user, the electronic device displays the message in the application interface to which the message belongs.

In some embodiments, the current field-of-view range of the user may be a display area of current output of the electronic device. In other words, when the location of the first interface is within the current field-of-view range of the user, the location of the first interface is within the display area of the current output of the electronic device.

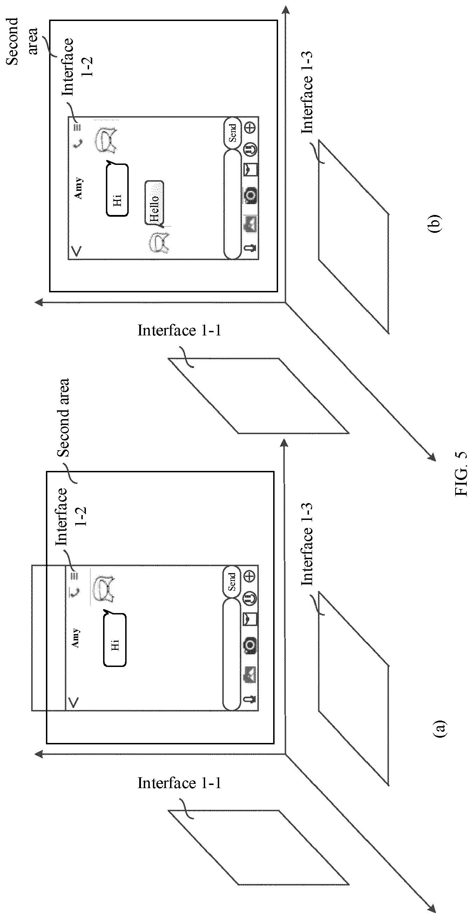

When the electronic device detects that the application interface to which the new message belongs is within the field-of-view range of the user, that is, the first area is within the second area, the electronic device may directly display the received new message in the application interface to which the message belongs. For example, FIG. 5 is a schematic diagram of a user interface according to an embodiment of this application. It is assumed that the user opens chat software QQ in an AR/VR device, and opens chat windows of a plurality of friends. For example, as shown in (a) in FIG. 5, interfaces corresponding to the chat windows of the plurality of friends are respectively an interface 1-1, an interface 1-2, and an interface 1-3. In this case, if the new message is a message sent by a friend to which the interface 1-2 belongs, the message may be directly displayed in the interface 1-2, for example, as shown in (b) in FIG. 5.

It may be understood that a location of the interface 1-2 may be understood as the first area, and a display interface of only the application interface 1-2 is shown in the figure. Display interfaces of the application interface 1-1 and the application interface 1-3 are similar to that of the application interface 1-2, and are not shown in the figure.

Step 306: If it is detected that the location of the first interface is not within the current field-of-view range of the user, the electronic device associates the message with the application interface.

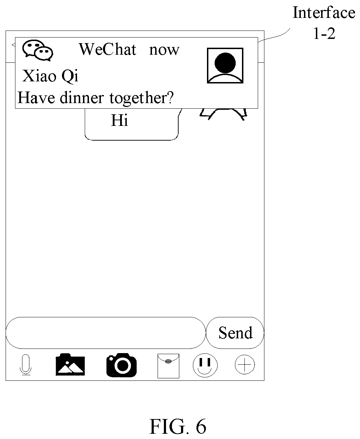

In some embodiments, when the application interface to which the new message belongs is not within the current field-of-view range of the user, the electronic device may display the new message in the current field-of-view range of the user in a form of a notification control by using a notification management system. For example, the user is chatting with a user Amy in the application interface 1-2 shown in (a) in FIG. 5. In this case, a WeChat friend sends a new message, and the new message may be displayed in the current field-of-view range of the user in a form of a notification, for example, may be displayed above the application interface 1-2, for example, as shown in FIG. 6.

In some other embodiments, when the application interface to which the new message belongs is not within the current field-of-view range of the user, the electronic device may display a notification by using an application corresponding to the new message. It should be noted that an interface for displaying the notification by the application is similar to the interface shown in FIG. 6. A difference lies in that one is that the notification management system controls the message to be displayed in a form of a notification, and the other is that the application controls the message to be displayed in a form of a notification.

In this embodiment of this application, that the location of the first interface is not within the current field-of-view range of the user may include the following two cases.

Case 1: The location of the first interface is not within the display area of the current output of the electronic device.

Case 2: The location of the first interface is within the display area of the current output of the electronic device, but is not within an area currently watched by the eyes of the user.

For the second case, the VR/AR device may obtain coordinates of the area currently watched by the eyes of the user, and then determine, based on the obtained coordinates of the area currently watched by the eyes of the user and the location of the first interface, whether the location of the first interface belongs to the area currently watched by the eyes of the user.

Based on the foregoing two cases, in this embodiment of this application, if an interface in which the first interface is located is not within the current field-of-view range of the user, the VR/AR device may associate the received new message with the first interface, so that the user can quickly find the application interface corresponding to the new message.

In this embodiment of this application, when associating the received new message with the first interface, the VR/AR device may indicate, in a form of an animation, a pointer, or the like, a location relationship between the new message and the application interface corresponding to the new message. The following describes, with reference to specific examples, a manner of associating the new message with the first interface.

It should be noted that the association form in this embodiment of this application may be a dynamic form, or may be a static form. This is not limited in this application.

Example 1: The VR/AR device may convert the new message displayed in a form of a notification control into a form of an animation (for example, a sphere) for display, and move the animation to the application interface to which the new message belongs.

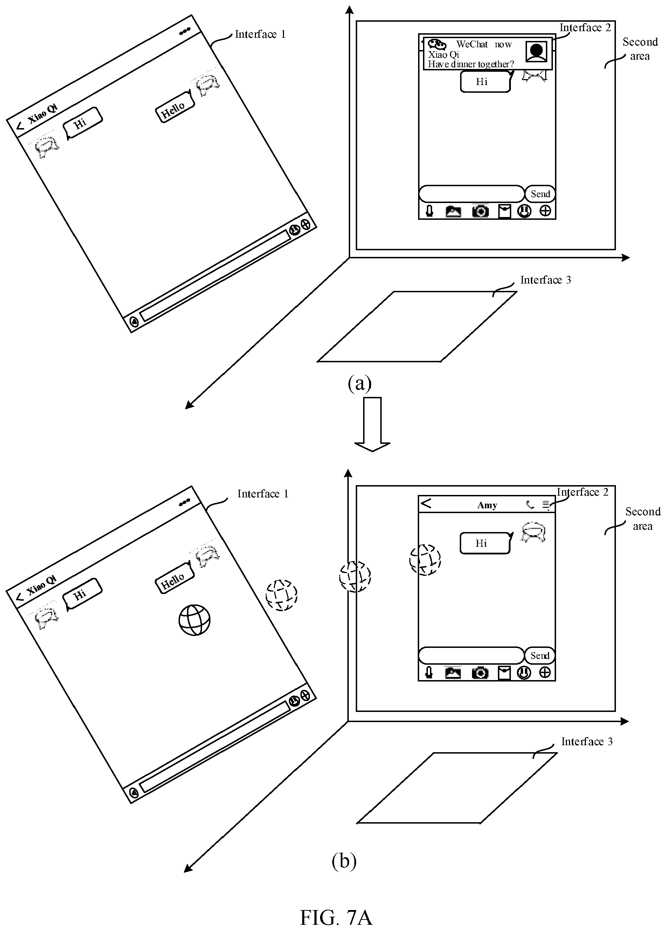

It is assumed that apps displayed in the space may include app 1, app 2, and app 3, where an interface corresponding to app 1 is an interface 1, an interface corresponding to app 2 is an interface 2, and an interface corresponding to app 3 is an interface 3. As shown in FIG. 7A, it is assumed that the new message is a message corresponding to app 1 (WeChat). In this case, the new message may be displayed in the current field-of-view range of the user in a form of a notification control, for example, displayed in the interface 2 corresponding to app 2 (QQ), for example, as shown in (a) in FIG. 7A. Then, the notification control may be converted into a sphere, and gradually fly to the application interface corresponding to app 1, for example, as shown in (b) in FIG. 7A. In this process, the user can directly see, by using naked eyes, that the new message is converted into the sphere in the interface 2 corresponding to QQ and flies to the interface 1 corresponding to WeChat. In this way, the user can intuitively see the location of the application interface to which the new message belongs.

It may be understood that FIG. 7A is merely an example for description. A form of association between the new message and the application interface to which the new message belongs includes but is not limited to the foregoing spherical rolling form, and may be another form. For example, the VR/AR device may alternatively convert the new message displayed in a form of a notification control into a spool shape, and move the spool shape to the application interface to which the new message belongs. This is not limited in this application.

Further, in a possible implementation, after the new message flies to the interface 1 in a sphere form, the user may tap the sphere, and then the new message may be displayed in a chat window in the interface 1. In this way, it can be convenient for the user to view and process the message.

In another possible implementation, after the new message flies to the interface 1 in a sphere form, the message may be automatically displayed in a chat window in the interface 1, or the new message may stay for specified duration (for example, 5s) after flying to the interface 1, and then the new message is displayed in a chat window in the interface 1. Certainly, the foregoing example is merely for schematic description. This is not limited in this application.

Example 2: The VR/AR device may indicate, in a connection line manner, the new message and the application interface to which the new message belongs.

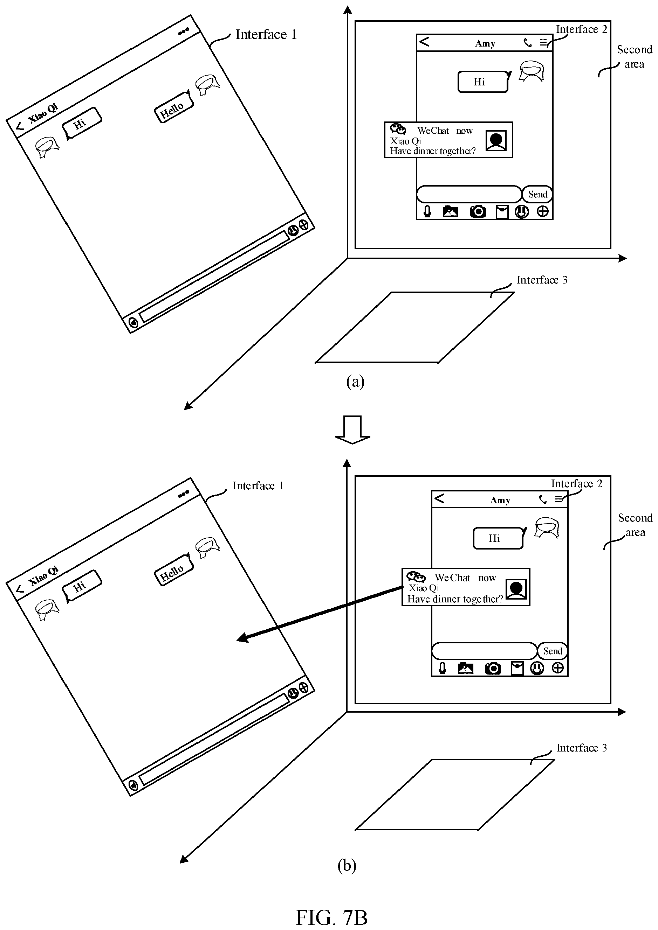

It is assumed that apps displayed in the space may include app 1, app 2, and app 3, where an interface corresponding to app 1 is an interface 1, an interface corresponding to app 2 is an interface 2, and an interface corresponding to app 3 is an interface 3. As shown in FIG. 7B, it is assumed that the new message is a message corresponding to app 1 (WeChat). In this case, the new message may be displayed in the current field-of-view range of the user in a form of a notification control, for example, as shown in (a) in FIG. 7B. Then, the VR/AR device may associate, by using a connection line, the new message with the interface 1 corresponding to app 1. For example, the new message and the interface 1 may be connected by using a solid line shown in (b) in FIG. 7B. In this way, an indication relationship between the new message and the application interface to which the new message belongs can be intuitively reflected, and the user can see, with naked eyes, the solid line between the new message and the interface 1 to which the new message belongs. Certainly, connection may alternatively be performed by using a dashed line. This is not limited in this application.

It should be noted that when association is performed in the connection line manner, the connection line may be a connection line with an arrow at both ends, or may be a connection line without an arrow at either end, or may be a connection line with an arrow at only one end. This is not limited in this application. In FIG. 7B, an example in which one end has an arrow is used for illustration.

In this way, the user can find, according to the connection line, the location of the application interface to which the new message belongs. In this case, if the user taps a notification control in the interface 2, the new message may be displayed in the interface 1, so that the user can reply to the new message.

Example 3: The VR/AR device may use the new message to point, in a form of an arrow, to the application interface to which the new message belongs.

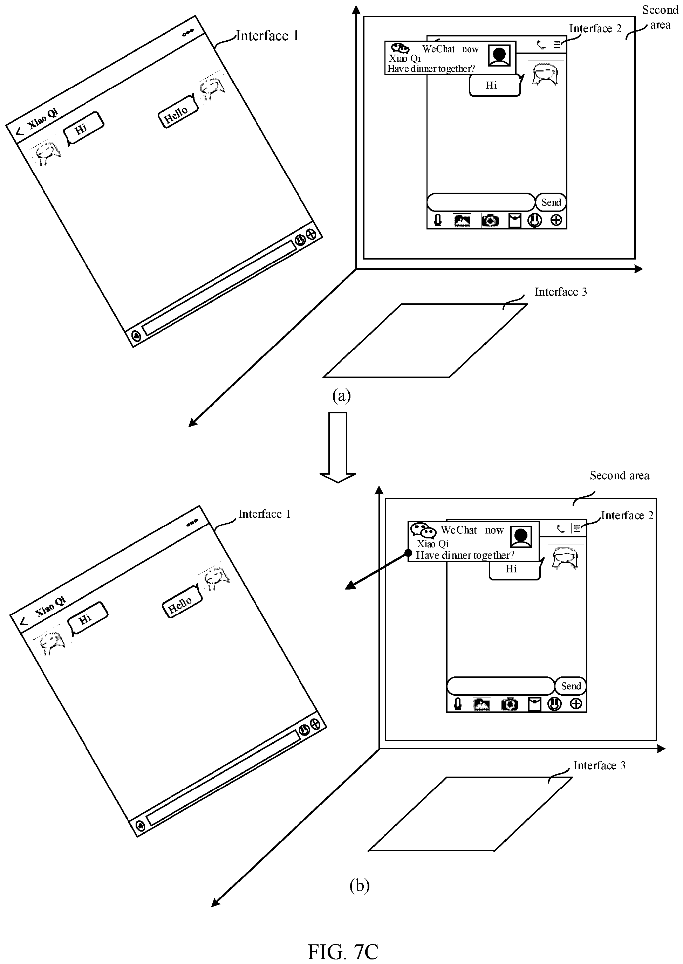

The foregoing example continues to be used. As shown in FIG. 7C, it is assumed that the new message is a message corresponding to app 1 (WeChat). In this case, the new message may be displayed in the current field-of-view range of the user in a form of a notification control, for example, as shown in (a) in FIG. 7C. Then, the VR/AR device may associate, in a form of a pointer, the new message with the interface 1 corresponding to app 1. For example, as shown in (b) in FIG. 7C, the user can intuitively see the pointer between the new message and the interface 1. In addition, the location of the application interface to which the new message belongs can be found according to the pointer.

Example 4: The VR/AR device may use the new message to point, in a form of a bubble, to the application interface to which the new message belongs.

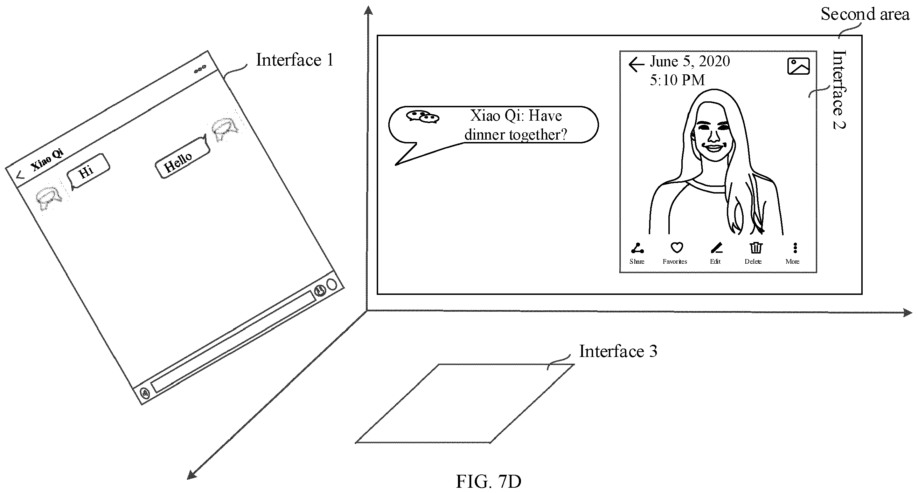

As shown in FIG. 7D, it is assumed that an application interface corresponding to app 1 (WeChat) is an interface 1, an application interface corresponding to app 2 (gallery) is an interface 2, and the new message is a message corresponding to app 1 (WeChat). In this case, the new message may be displayed in the current field-of-view range of the user in a form of a bubble shown in FIG. 7D. In addition, an arrow on the bubble may point to the interface 1 to which the new message belongs. The user can intuitively see the bubble between the new message and the interface 1, and the user can find, according to a direction of the arrow on the bubble, the location of the application interface to which the new message belongs. It should be understood that the direction of the arrow on the bubble changes with the location of the application interface.

It may be understood that the foregoing example is merely for schematic description. A form of associating the new message with the application interface to which the new message belongs is not limited to the foregoing manner. For example, the VR/AR device may alternatively associate the new message with the application interface of app 1 in another form. This is not limited in this application.

In addition, the association form may be an association form with a color, an effect, or the like. For example, the connection line may be a red connection line, and the bubble may be a bubble with a color or a shadow. This is not specifically limited in this application.

It should be noted that coordinates in the schematic diagrams shown in FIG. 4B, FIG. 5, FIG. 7A, FIG. 7B, FIG. 7C, and FIG. 7D are merely for illustration, and no coordinate system is displayed in actual space.

In a possible implementation, the indication manner may be displayed in an implicit form. To be specific, time for displaying the indication manner of the new message and the application interface to which the new message belongs may be preset duration, for example, 1 minute. When 1 minute expires, the association form may be hidden. In other words, if the user does not view the new message in a timely manner, when the user wants to view the new message subsequently, the user may tap the notification control corresponding to the new message. Then, the associated form is played again. For example, the VR/AR device receives two new messages, for example, a message 1 and a message 2. An application interface to which the message 1 belongs is within the field-of-view range of the user, and an application interface to which the message 2 belongs is not within the field-of-view range of the user. In this case, if the user first views the message 1 whose application interface is within the field-of-view range, the message 2 may be connected, by using a connection line, to the application interface to which the message 2 belongs, and the connection line may be hidden after 1 minute. If the user wants to view the message 2 after 5 minutes, the user may tap a notification control of the message 2. In this case, the connection line between the message 2 and the application interface to which the message 2 belongs may be displayed again, to facilitate viewing by the user.

Certainly, in this embodiment of this application, the time for displaying the indication manner of the new message and the application interface to which the new message belongs may not be limited, and the indication manner may alternatively be displayed in an explicit form. In other words, the indication manner may be always displayed in the space. This is not limited in this application.

Further, in some embodiments of this application, when the VR/AR device associates the new message with the application interface to which the new message belongs, a selected association form may be random, or may be sequentially selected in a fixed order.

In a possible implementation, the electronic device may pre-store a plurality of association forms. For example, if the VR/AR device receives a new message 1, and an application interface to which the new message 1 belongs is not within the field-of-view range of the user, any one of the plurality of pre-stored association forms may be randomly selected. For example, a connection line form is selected to associate the new message 1 with the application interface to which the new message 1 belongs. Then, if the VR/AR device receives a new message 2, and an application interface to which the new message 2 belongs is not within the field-of-view range of the user, any one of the plurality of pre-stored association forms may be randomly selected. For example, a pointer form is selected to associate the new message 2 with the application interface to which the new message 2 belongs. Certainly, it may be understood that when the VR/AR device randomly selects an association form, association forms selected for different messages may be the same or may be different. For example, for the new message 2, the VR/AR device may alternatively select the connection line form to associate the new message 2 with the application interface to which the new message 2 belongs.

In another possible implementation, the VR/AR device may sequentially associate, in the plurality of pre-stored association forms, received new messages with application interfaces to which the new messages belong. It is assumed that each pre-stored association form has a corresponding number, for example, 1, 2, 3, 4, or the like. For example, if the VR/AR device receives a new message 1, and an application interface to which the new message 1 belongs is not within the field-of-view range of the user, an association form numbered 1 may be selected to associate the new message 1 with the application interface to which the new message 1 belongs. Then, if the VR/AR device receives a new message 2, and an application interface to which the new message 2 belongs is not within the field-of-view range of the user, an association form numbered 2 is selected to associate the new message 2 with the application interface to which the new message 2 belongs, and so on.

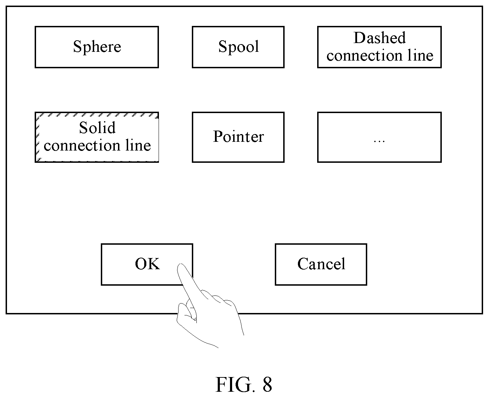

In some other embodiments of this application, when the VR/AR device receives a new message, and an application interface to which the new message belongs is not within the field-of-view range of the user, the VR/AR device may provide a selection interface, so that the user can select an association form based on a preference of the user. For example, as shown in FIG. 8, when the VR/AR device receives a new message, and an application interface to which the new message belongs is not within the field-of-view range of the user, an interface shown in FIG. 8 may be displayed within the field-of-view range of the user. The interface may include a plurality of association forms. The user may select an association form based on a requirement, a preference, or the like of the user. For example, the user selects a solid line connection form. After selecting the association form, the user may tap an "OK" button. Then, the VR/AR device can associate, in the association form selected by the user, the new message with the application interface to which the new message belongs.

It may be understood that, in the schematic diagram shown in FIG. 8, a selection box of the solid line connection association form selected by the user is filled with slashes. In actual application, the association form selected by the user may alternatively be displayed in another form, for example, may be displayed in a color such as gray or red. This is not limited in this application.

It should be noted that the interface shown in FIG. 8 may be displayed at any location within the field-of-view range of the user, for example, may be displayed at an upper layer of any interface within the field-of-view range of the user. This is not limited in this application.

In some other embodiments, the VR/AR device may select different association forms based on a distance between the new message and the application interface to which the new message belongs, to indicate a location relationship between the new message and the application interface to which the new message belongs. For example, when the distance between the new message and the application interface to which the new message belongs is relatively long, a connection line form may be selected to associate the new message with the application interface to which the new message belongs. When the distance between the new message and the application interface to which the new message belongs is relatively short, a pointer form may be selected to associate the new message with the application interface to which the new message belongs.

The foregoing description is provided by using merely an example in which the electronic device receives one new message. It should be noted that, when the electronic device simultaneously receives a plurality of new messages, and an application interface to which at least one of the plurality of new messages belongs is not within the field-of-view range of the user, different association forms may be selected for different messages. In this way, it can be convenient for the user to find an application interface to which a new message belongs.

For example, for a message 1, the VR/AR device may select a connection line form in the plurality of pre-stored association forms to associate the message 1 with an application interface to which the message 1 belongs. For a message 2, the VR/AR device may select an association form different from the association form of the message 1, for example, a pointer form, to associate the message 2 with an application interface to which the message 2 belongs.

It may be understood that the VR/AR device may alternatively select an association form that is the same as the association form of the message 1 to associate the message 2 with the application interface to which the message 2 belongs. This is not limited in this application.

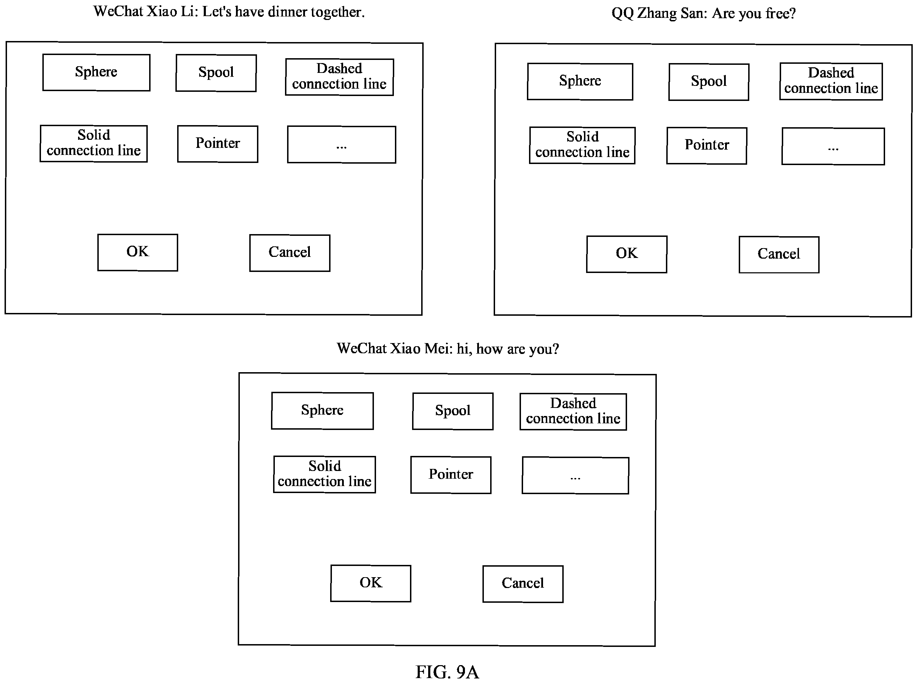

In some other embodiments, if the user selects an association form, one selection interface may be displayed for one message. For example, if the VR/AR device receives three new messages, three selection interfaces may be displayed in the field-of-view range of the user. A message source, message content, and the like corresponding to each selection interface may be displayed above each selection interface. For example, refer to an interface shown in FIG. 9A.

For example, the new messages are:
a message 1, which is a message from a WeChat friend Xiao Li: "Let's have dinner together.";
a message 2, which is a message from a QQ friend Zhang San: "Are you free?"; and
a message 3, which is a message from a WeChat friend Xiao Mei: "hi, how are you?".

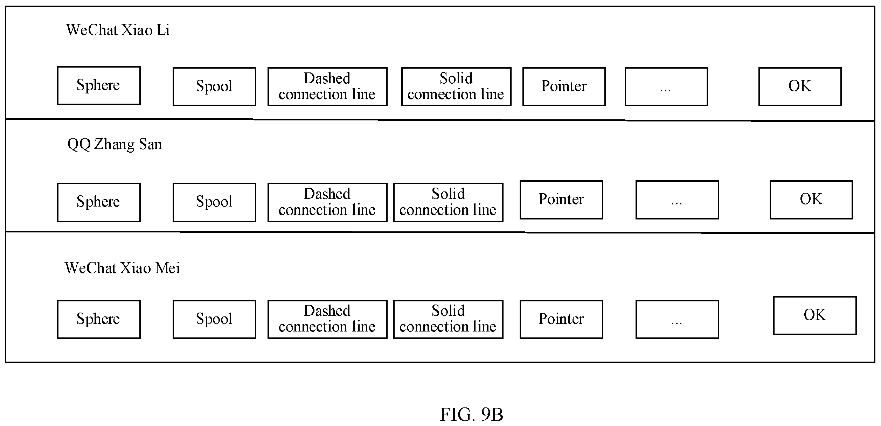

The foregoing three new messages may be displayed above three selection interfaces in a display form shown in FIG. 9A. Certainly, it may be understood that the selection interface may alternatively be an interface shown in FIG. 9B. To be specific, selection interfaces of the three new messages are displayed in one interface, and the interface may include selection boxes of the three new messages. In addition, content displayed above the selection interface may include only an app to which the message belongs and a person who sends the message, for example, "WeChat Xiao Li: Let's have dinner together.", or may include "WeChat: Xiao Li" or the like. This is not limited in this application.

It should be noted that in the schematic diagrams shown in FIG. 9A and FIG. 9B, the user may select a same association form or different association forms for different messages. This is not limited in this application

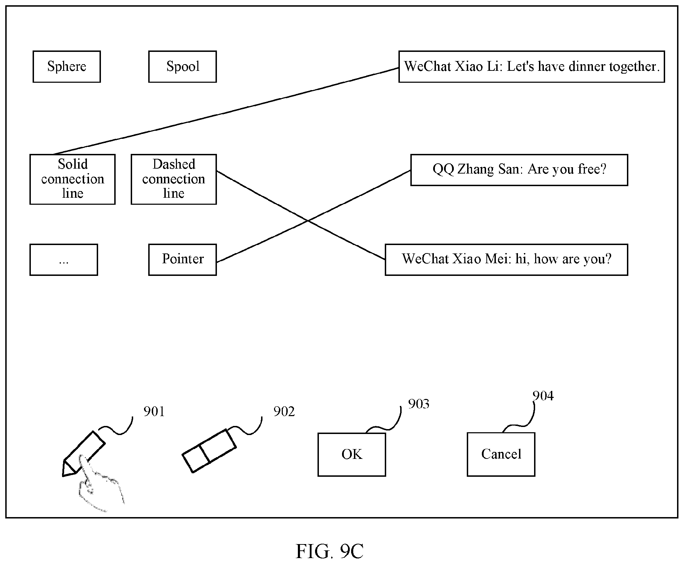

In another example, as shown in FIG. 9C, the user may select a message and an association form by using a connection line. For example, an interface shown in FIG. 9C may include a pencil 901, an eraser 902, an "OK" button 903, and a "Cancel" button 904. The user may tap the pencil 901, and then sequentially connect messages to association forms. For example, in FIG. 9C, it may be selected that a message 1 and an application interface to which the message 1 belongs are indicated by using a solid connection line, a message 2 and an application interface to which the message 2 belongs are indicated by using a pointer, and a message 3 and an application interface to which the message 3 belongs are indicated by using a dashed connection line.

After the connection is completed, if the user confirms that no modification is required, the user may tap the "OK" button 903. If the user wants to adjust a selected association form in a connection process, the user may reselect an association form by using the eraser 902 or tapping the "Cancel" button 904.

It may be understood that "..." in the schematic diagrams shown in FIG. 8, FIG. 9A, FIG. 9B, and FIG. 9C may represent another association form, for example, an animation in another form. This is not limited in this application.

It should be noted that the interface diagram in this embodiment of this application is merely a schematic diagram. During actual product implementation, a button, a control, or the like displayed in the interface may be displayed, or may not be displayed. Certainly, another button, control, or the like may be displayed. This application is not limited thereto.

In the foregoing embodiments provided in this application, the method provided in embodiments of this application is described from a perspective of an electronic device serving as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

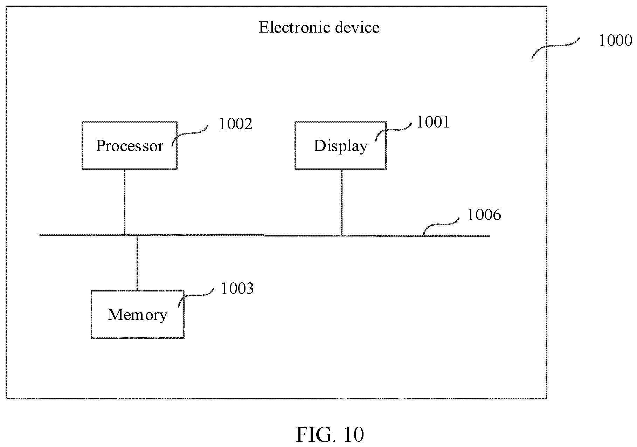

FIG. 10 is a schematic diagram of a structure of another electronic device according to an embodiment of this application. The electronic device may be an electronic device having a display. Referring to FIG. 10, the electronic device 1000 includes a display 1001, one or more processors 1002, a memory 1003, a plurality of applications 1004 (not shown in the figure), and one or more computer programs 1005 (not shown in the figure). The foregoing components may be connected by using one or more communications buses 1006.

The display 1001 is configured to display a display interface of an application in the electronic device, and the like.

The memory 1003 stores one or more computer programs, and the one or more computer programs include instructions. The processor 1002 invokes the instructions stored in the memory 1003, so that the electronic device 1000 performs the following steps:
receiving a first message; determining an identifier of a first application interface to which the first message belongs; obtaining, based on the identifier of the first application interface, a first area in which the first application interface to which the first message belongs is located; and indicating an orientation relationship between the first message and the first application interface in a first indication form if determining that the first area in which the first application interface to which the first message belongs is located is not in a second area, where the second area is an area in which a field-of-view range of a user is located.

In a possible design, the determining an identifier of a first application interface to which the first message belongs includes: obtaining identification information carried in the first message; and determining, based on the identification information carried in the first message, the identifier of the first application interface to which the first message belongs.

In a possible design, when the instructions are invoked and executed by the one or more processors 1002, the electronic device 1000 is enabled to further perform the following step: displaying the first message in the second area in a form of a notification.

In a possible design, when the instructions are invoked and executed by the one or more processors 1002, the electronic device 1000 is enabled to further perform the following step: if determining that the first area is in the second area, displaying the first message in the first application interface to which the first message belongs.

In a possible design, the determining that the first area in which the first application interface to which the first message belongs is located is not in a second area includes: determining that the first area in which the first application interface to which the first message belongs is located is not in a third area, where the third area is a first sub-area of the second area, and the third area is a current display area of a VR device or an AR device; or determining that the first area in which the first application interface to which the first message belongs is located is in a third area but is not in a fourth area, where the fourth area is a second sub-area of the second area, and the fourth area is an area currently watched by eyes of the user.

In a possible design, the indicating an orientation relationship between the first message and the first application interface in a first indication form includes: determining the first indication form in a first set based on a distance between the first message and the first application interface, where the first set includes at least one indication form, and the first set is pre-stored in the VR device or the AR device; and indicating the orientation relationship between the first message and the first application interface in the first indication form.

In a possible design, the indicating an orientation relationship between the first message and the first application interface in a first indication form includes: selecting any indication form from a first set as the first indication form, where the first set includes at least one indication form, and the first set is pre-stored in the VR device or the AR device; and indicating the orientation relationship between the first message and the first application interface in the first indication form.

In a possible design, the indicating an orientation relationship between the first message and the first application interface in a first indication form includes: determining the first indication form based on a number sequence of indication forms in a first set; and indicating the orientation relationship between the first message and the first application interface in the first indication form. The first set includes at least one indication form, and the first set is pre-stored in the VR device or the AR device.

In a possible design, the indicating an orientation relationship between the first message and the first application interface in a first indication form includes: displaying prompt information in the second area, where the prompt information is used to prompt the user to select the first indication form from a first set, the first set includes at least one indication form, and the first set is pre-stored in the VR device or the AR device; and indicating the orientation relationship between the first message and the first application interface in the first indication form selected by the user.

In a possible design, the first indication form includes any one of the following forms: pointer indication, connection line indication, and animation indication.

In a possible design, the first indication form is displayed in an explicit form or an implicit form, the explicit form is a display form in which the first indication form is continuously displayed in space, and the implicit form is a display form in which the first indication form disappears after being displayed in space for specified duration.

In embodiments of this application, the processor 1002 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor. The software module may be located in the memory 1003, and the processor 1002 reads program instructions in the memory 1003 and completes the steps in the foregoing method in combination with hardware of the processor 1002.

In embodiments of this application, the memory 1003 may be a non-volatile memory, such as a hard disk drive (hard disk drive, HDD) or a solid-state drive (solid-state drive, SSD), or may be a volatile memory (volatile memory), such as a RAM. The memory may alternatively be any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store instructions and/or data.

It may be clearly understood by a person skilled in the art that, for convenience and brevity of description, for a specific working process of the foregoing described apparatus and unit, refer to a corresponding process in the foregoing method embodiments, and details are not described herein again.

Based on the foregoing embodiments, an embodiment of this application further provides a chip. The chip is coupled to a memory in an electronic device, to perform the message prompt method provided in embodiments of this application. In embodiments of this application, "coupling" means that two components are directly or indirectly combined with each other.

Based on the foregoing embodiments, this application further provides a computer storage medium. The computer storage medium stores a computer program. When the computer program is executed by a computer, the computer is enabled to perform the message prompt method provided in the foregoing embodiments.

An embodiment of this application further provides a computer program product, including instructions. When the computer program product runs on a computer, the computer is enabled to perform the message prompt method provided in the foregoing embodiments.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of a process and/or a block in the flowcharts and/or the block diagrams. These instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. A message prompt method, applied to a virtual reality VR device or an augmented reality AR device, and comprising:
receiving a first message;
determining an identifier of a first application interface to which the first message belongs;
obtaining, based on the identifier of the first application interface, a first area in which the first application interface to which the first message belongs is located; and
indicating an orientation relationship between the first message and the first application interface in a first indication form if determining that the first area in which the first application interface to which the first message belongs is located is not in a second area, wherein the second area is an area in which a field-of-view range of a user is located.

2. The method according to claim 1, wherein the determining an identifier of a first application interface to which the first message belongs comprises:
obtaining identification information carried in the first message; and
determining, based on the identification information carried in the first message, the identifier of the first application interface to which the first message belongs.

3. The method according to claim 1 or 2, wherein the method further comprises: displaying the first message in the second area in a form of a notification.

4. The method according to any one of claims 1 to 3, wherein the method further comprises: if determining that the first area is in the second area, displaying the first message in the first application interface to which the first message belongs.

5. The method according to any one of claims 1 to 4, wherein the determining that the first area in which the first application interface to which the first message belongs is located is not in a second area comprises:
determining that the first area in which the first application interface to which the first message belongs is located is not in a third area, wherein the third area is a first sub-area of the second area, and the third area is a current display area of the VR device or the AR device; or
determining that the first area in which the first application interface to which the first message belongs is located is in a third area but is not in a fourth area, wherein the fourth area is a second sub-area of the second area, and the fourth area is an area currently watched by eyes of the user.

6. The method according to any one of claims 1 to 5, wherein the indicating an orientation relationship between the first message and the first application interface in a first indication form comprises:
determining the first indication form in a first set based on a distance between the first message and the first application interface, wherein the first set comprises at least one indication form, and the first set is pre-stored in the VR device or the AR device; and
indicating the orientation relationship between the first message and the first application interface in the first indication form.

7. The method according to any one of claims 1 to 5, wherein the indicating an orientation relationship between the first message and the first application interface in a first indication form comprises:
selecting any indication form from a first set as the first indication form, wherein the first set comprises at least one indication form, and the first set is pre-stored in the VR device or the AR device; and
indicating the orientation relationship between the first message and the first application interface in the first indication form.

8. The method according to any one of claims 1 to 5, wherein the indicating an orientation relationship between the first message and the first application interface in a first indication form comprises:
determining the first indication form based on a number sequence of indication forms in a first set, wherein the first set comprises at least one indication form, and the first set is pre-stored in the VR device or the AR device; and
indicating the orientation relationship between the first message and the first application interface in the first indication form.

9. The method according to any one of claims 1 to 5, wherein the indicating an orientation relationship between the first message and the first application interface in a first indication form comprises:
displaying prompt information in the second area, wherein the prompt information is used to prompt the user to select the first indication form from a first set, the first set comprises at least one indication form, and the first set is pre-stored in the VR device or the AR device; and
indicating the orientation relationship between the first message and the first application interface in the first indication form selected by the user.

10. The method according to any one of claims 1 to 9, wherein the first indication form comprises any one of the following forms: pointer indication, connection line indication, and animation indication.

11. The method according to any one of claims 1 to 10, wherein the first indication form is displayed in an explicit form or an implicit form, the explicit form is a display form in which the first indication form is continuously displayed in space, and the implicit form is a display form in which the first indication form disappears after being displayed in space for specified duration.

12. An electronic device, wherein the electronic device comprises a display, one or more processors, a memory, a plurality of applications, and one or more computer programs, wherein
the one or more computer programs are stored in the memory, the one or more computer programs comprise instructions, and when the instructions are invoked and executed by the one or more processors, the electronic device is enabled to perform the following steps:
receiving a first message;
determining an identifier of a first application interface to which the first message belongs;
obtaining, based on the identifier of the first application interface, a first area in which the first application interface to which the first message belongs is located; and
indicating an orientation relationship between the first message and the first application interface in a first indication form if determining that the first area in which the first application interface to which the first message belongs is located is not in a second area, wherein the second area is an area in which a field-of-view range of a user is located.

13. The electronic device according to claim 12, wherein the determining an identifier of a first application interface to which the first message belongs comprises:
obtaining identification information carried in the first message; and
determining, based on the identification information carried in the first message, the identifier of the first application interface to which the first message belongs.

14. The electronic device according to claim 12 or 13, wherein when the instructions are invoked and executed by the one or more processors, the electronic device is enabled to further perform the following step:
displaying the first message in the second area in a form of a notification.

15. The electronic device according to any one of claims 12 to 14, wherein when the instructions are invoked and executed by the one or more processors, the electronic device is enabled to further perform the following step:
if determining that the first area is in the second area, displaying the first message in the first application interface to which the first message belongs.

16. The electronic device according to any one of claims 12 to 15, wherein the determining that the first area in which the first application interface to which the first message belongs is located is not in a second area comprises:
determining that the first area in which the first application interface to which the first message belongs is located is not in a third area, wherein the third area is a first sub-area of the second area, and the third area is a current display area of a VR device or an AR device; or
determining that the first area in which the first application interface to which the first message belongs is located is in a third area but is not in a fourth area, wherein the fourth area is a second sub-area of the second area, and the fourth area is an area currently watched by eyes of the user.

17. The electronic device according to any one of claims 12 to 16, wherein the indicating an orientation relationship between the first message and the first application interface in a first indication form comprises:
determining the first indication form in a first set based on a distance between the first message and the first application interface, wherein the first set comprises at least one indication form, and the first set is pre-stored in the VR device or the AR device; and
indicating the orientation relationship between the first message and the first application interface in the first indication form.

18. The electronic device according to any one of claims 12 to 16, wherein the indicating an orientation relationship between the first message and the first application interface in a first indication form comprises:
selecting any indication form from a first set as the first indication form, wherein the first set comprises at least one indication form, and the first set is pre-stored in the VR device or the AR device; and
indicating the orientation relationship between the first message and the first application interface in the first indication form.

19. The electronic device according to any one of claims 12 to 16, wherein the indicating an orientation relationship between the first message and the first application interface in a first indication form comprises:
determining the first indication form based on a number sequence of indication forms in a first set, wherein the first set comprises at least one indication form, and the first set is pre-stored in the VR device or the AR device; and
indicating the orientation relationship between the first message and the first application interface in the first indication form.

20. The electronic device according to any one of claims 12 to 19, wherein the indicating an orientation relationship between the first message and the first application interface in a first indication form comprises:
displaying prompt information in the second area, wherein the prompt information is used to prompt the user to select the first indication form from a first set, the first set comprises at least one indication form, and the first set is pre-stored in the VR device or the AR device; and
indicating the orientation relationship between the first message and the first application interface in the first indication form selected by the user.

21. The electronic device according to any one of claims 12 to 20, wherein the first indication form comprises any one of the following forms: pointer indication, connection line indication, and animation indication.

22. The electronic device according to any one of claims 12 to 21, wherein the first indication form is displayed in an explicit form or an implicit form, the explicit form is a display form in which the first indication form is continuously displayed in space, and the implicit form is a display form in which the first indication form disappears after being displayed in space for specified duration.

23. A computer storage medium, comprising computer instructions, wherein when the computer instructions are run on an electronic device, the electronic device is enabled to perform the message prompt method according to any one of claims 1 to 11.
